# EUROPÄISCHE PATENTSCHRIFT

(11) **EP 0 529 204 B1**
(45) Veröffentlichungstag und Bekanntmachung des Hinweises auf die Patenterteilung: **06.09.1995**
(21) Anmeldenummer: 92108575.9
(22) Anmeldetag: 21.05.1992
(51) Int. Cl.: B29C 51/26, B29C 51/18

(54) **Vorrichtung zum Zuführen von plattenförmigen Zuschnitten zu einer Tiefziehmaschine**
Apparatus for conveying plates towards a deep drawing machine
Appareil pour transférer des plaques vers une machine de thermoformage

(30) Priorität: 22.08.1991 DE 4127854
(43) Veröffentlichungstag der Anmeldung: 03.03.1993
(73) Patentinhaber: Tetra Laval Holdings & Finance SA, 1009 Pully (CH)
(72) Erfinder: Reil, Wilhelm, W-6140 Bensheim 1 (DE); Liebram, Udo, W-6102 Pfungstadt (DE); Wallich, Manfred, W-6108 Graefenhausen (DE); Korus, Bernhard, W-6100 Darmstadt (DE)
(74) Vertreter: Weber, Dieter, Dr.

(56) Entgegenhaltungen:
- GB-A- 1 160 779
- GB-A- 2 134 033

## Beschreibung

Die Erfindung betrifft eine Vorrichtung zum Zuführen von plattenförmigen Zuschnitten aus tiefziehfähigem Kunststoff zur Aufnahmestation einer Formmaschine mit mindestens einer beheizbaren Saugplatte. Es sind zahlreiche Verfahren und Vorrichtungen zur Herstellung von Fließmittelpackungen bekannt, wobei sich ein besonderes Verfahren auf die Herstellung einer mit einem Fließmittel gefüllten Packung bezieht, z.B. einer mit Milch oder Saft gefüllten Packung. Diese besteht aus einem Tubus mit Boden und Oberwand, wobei alle Teile aus verformbarem Kunststoff gebildet sind, vorzugsweise mittels einer Tiefziehmaschine. Dabei ist es bekannt, daß zwei Zuschnitte in Gestalt jeweils einer ebenen Platte von einem Magazin genommen und einer von mehreren beheizbaren Saugplatten zugeführt wird. Die beheizbare Saugplatte wird also von beiden Seiten her mit jeweils einem getrennten Zuschnitt derart beschickt, daß die zwei Zuschnitte im Abstand voneinander an dieser Saugplatte anlegen und erwärmt werden.

Die weiteren Verfahrensschritte in der Tiefziehmaschine, insbesondere das stufenweise Aufheizen durch Berührung mit mehreren beheizbaren Saugplatten, ist für die vorliegende Erfindung nicht von Interesse und wird daher hier nicht beschrieben.

Die Erfindung bezieht sich in der Hauptsache auf das Zuführen der Zuschnitte bis zur beheizbaren Saugplatte, wobei Verbesserungen der bisher teilweise schon firmenintern entwickelten Vorrichtungen vorgenommen werden.

Bei dem vorstehend beschriebenen bekannten Verfahren sind zwei auf gegenüberliegenden Seiten der beheizbaren Saugplatte oder der Vielzahl von beheizbaren Saugplatten angeordnete Magazine für die bereits vereinzelten Zuschnitte vorgesehen. Es hat sich gezeigt, daß es schwierig ist, plattenförmige Zuschnitte in großen Mengen zu bündeln, wobei außerdem Umverpackungsmaterialien erforderlich sind, die möglichst vermieden werden sollen. Packungen werden bekanntlich bedruckt, und wenn bereits ein wenigstens teilweiser Druck auf den einzelnen Zuschnitten aufgebracht ist, dann besteht die Gefahr, daß der Druck falsch ausgerichtet ist oder gar vertauscht ist. Bei der betriebsinternen Benutzung des bisherigen Herstellungsverfahrens war ständig eine Person mit der Beschickung der Tiefziehmaschine beschäftigt. Durch diese und andere Manipulationen für das richtige Führen der Zuschnitte vom Magazin bis zu den beheizbaren Saugplatten ergaben sich auch Hygieneprobleme, abgesehen von den höheren Kosten durch diese von der beschriebenen Person durchgeführten Manipulationen bis zur Vereinzelung der Zuschnitte.

Der Fachmann wußte, daß durch die Herstellung der tiefgezogenen Packung aus zwei Schalenhälften, für welche auf jeder Seite der jeweils beheizbaren Saugplatte ein Zuschnitt zugeführt werden mußte, auf jeder Seite auch ein Magazin für Zuschnitte mit allen mechanischen Fördereinrichtungen notwendig war. Es hätte nahegelegen, anstelle von vereinzelten Zuschnitten von einer Bahn zu arbeiten, wobei auf jeder Seite der jeweils beheizbaren Saugplatte eine Vorratsrolle und eine Bahn aus tiefziehfähigem Kunststoff hätte zugeführt werden müssen. Nicht nur der Aufwand einer solchen Anlage wäre bedenklich, sondern auch die Gefahr der Vertauschbarkeit der Lage des bedruckten Teils auf dem dann abgeschnittenen Zuschnitt wäre nicht ausgeschaltet gewesen. Darüberhinaus ist es das Ziel des Unternehmers, eine lange Laufzeit einer Packungsherstellungsmaschine ohne Betriebsunterbrechung für die Zuführung von Rohmaterial zu erreichen. Im Falle von Vorratsrollen hat der Fachmann aber keine Möglichkeit der kontinuierlichen Weiterführung des Betriebes ohne Unterbrechung beim Rollenwechsel gesehen.

Aus dem Dokument Patent Abstracts of Japan, Band 11, Nr. 94, ist zwar bereits eine Vorrichtung der eingangs genannten Art bekannt, diese betrifft aber nicht das Tiefziehen sondern das Preßformen. Ein von einer Bahn vereinzelter plattenförmiger Zuschnitt aus Kunststoff wird mit Hilfe einer beheizbaren Saugplatte einer Preßformmaschine zugeführt. Die gewellte Oberflächenkontur des Preßwerkzeuges entspricht der Oberfläche der beheizbaren Saugplatte, von der es nur eine Platte in der bekannten Vorrichtung gibt, so daß die Leistung der Formmaschine beschränkt ist.

Der Erfindung liegt daher die Aufgabe zugrunde, eine Vorrichtung mit den eingangs erwähnten Merkmalen so auszugestalten, daß die Produktion trotz Erhöhung der Maschinenleistung vereinfacht wird und der Betrieb den hohen Hygieneanforderungen besser gerecht wird.

Diese Aufgabe beinhaltet mindestens teilweise die Beseitigung der konkret genannten Nachteile bekannter Verfahren und betriebsintern bereits entwickelter Vorrichtungen.

Die Aufgabe wird erfindungsgemäß dadurch gelöst, daß die beheizbare Saugplatte zwei gegenüberliegende Seiten hat, deren jeweilige Oberfläche mit einem Zuschnitt beschickt werden kann, daß eine Vorratsrolle mit einer Bahn aus tiefziehfähigem Kunststoff über Antriebsrollenpaare intermittierend antreibbar vor einer Schneideinrichtung mit nachgeschaltetem Magazin vorgesehen ist, daß eine bewegliche, mit Saugern versehene Klappe und eine erste Stützplatte mit der Abnahmeseite des Magazins in Eingriff bringbar sind, daß das Abnehmen der Zuschnitte an der Abnahmeseite des Magazins zum einen über die bewegliche Klappe, zum anderen über die erste Stützplatte erfolgt, daß eine zweite bewegliche und mit Saugern versehene Stützplatte auf der bezüglich der beheizbaren Saugplatte anderen Seite, gegenüber der ersten Stützplatte, angeordnet ist, daß eine Führungseinrichtung mit Förderer zum Herumführen der Zuschnitte von der beweglichen Klappe auf die gegenüberliegende Seite der beheizbaren Saugplatte zur zweiten Stützplatte vorgesehen ist und daß die Formmaschine eine Tiefziehmaschine ist.

Die Erfinder haben eine Anordnung gewagt, bei welcher nur von einer Vorratsrolle eine Kunststoffbahn abgezogen, in Zuschnitte aufgeteilt und dann diese Zuschnitte abwechselnd auf die eine und kurz danach auf die andere Seite wenigstens einer beheizbaren Saugplatte einer Tiefziehmaschine zugeführt werden, so daß kurz vor dem Abschluß der Zuführbewegung die oberste beheizbare Saugplatte, sofern es mehrere davon gibt, die untereinander angeordnet sind, auf jeder ihrer beiden gegenüberliegenden Oberflächen mit jeweils einem Zuschnitt beschickt werden kann. Hierdurch werden die Gesamtkosten der Vorrichtung halbiert, weil die Zuführeinrichtungen von der Vorratsrolle bis zur Schneideinrichtung nur in einfacher Ausfertigung vorgesehen sein müssen. Außerdem wird die Produktion dadurch überraschend vereinfacht, daß nun doch von einer laufenden Bahn von einer Vorratsrolle her gearbeitet werden kann. Bei diesen Überlegungen gemäß der Erfindung ergibt sich der weitere Vorteil, daß die Kunststoffbahn entsprechend bedruckt sein kann und eine Vertauschung der bedruckten Teile nicht mehr möglich ist, weil die Maschine stets die gleichen Bewegungen durchführt und abwechselnd immer die eine und danach die andere Seite der beheizbaren Saugplatte beschickt. Durch die Vermeidung von Handarbeit und vielen Manipulationen gegenüber dem Zuführen von bereits vorgeschnittenen Zuschnitten können auch die Hygieneanforderungen durch die erfindungsgemäße Anordnung wesentlich besser erfüllt werden.

Das tiefziehfähige Kunststoffmaterial für die plattenförmigen Zuschnitte und damit für die mit der Tiefziehmaschine herstellbare Packung kann ein thermoplastischer Kunststoff sein, z.B. Polypropen. Auch PVC kann als solcher Kunststoff dienen, wobei Polypropen in der Technik weitgehend auch als Polypropylen bekannt ist. Die durch die erfindungsgemäße Vorrichtung herstellbare Packung besteht dann aus einwandfrei wiederaufarbeitbarem und leicht verrottbaren Teilen und Materialien (im Gegensatz zu Verbundmaterialien - Papier/Kunststoff). Bei einer besonders bevorzugten Ausführungsform kann man das Kunststoffmaterial, z.B. das Polypropen, auch füllen, wobei als Füllstoffe hier an Kreide, Glimmer, Talkum, Gips oder dergleichen gedacht ist. In der Praxis haben sich Füllgrade von bis zu 70 %, vorzugsweise 60 %, als günstig erwiesen. Es hat sich gezeigt, daß derartige gefüllte Kunststoffmaterialien einerseits verrottbar sind, natürlich auch ohne weiteres und nach einfachen Methoden wieder aufgearbeitet bzw. rezykliert werden können und andererseits die Eigenschaften eines Kunststoffes nicht beeinträchtigen, so daß derartige gefüllte Kunststoffmaterialien insbesondere tiefziehfähig und auch siegelfähig sind.

Von der Vorratsrolle wird die Kunststoffbahn in eine Schneideinrichtung gezogen bzw. geschoben, in welcher die Bahn quer zu ihrer Förderrichtung geschnitten wird, so daß fortlaufende plattenförmige Zuschnitte entstehen. Diese werden nun nicht von Führungen direkt der Saugplatte zugeführt, sondern es ist erfindungsgemäß ein Magazin nachgeschaltet, in welchem die einzelnen Zuschnitte wie in einer Pufferzone in einer bestimmten Stückzahl gestapelt werden. Der Sinn dieses Magazins besteht in der Hauptsache in der Vergleichmäßigung der Zuführung, wobei dann auch die Bahnförderung teilweise unterbrochen werden kann. Mit dieser Maßnahme kann man überraschend den Rollenwechsel ohne jeglichen Einfluß auf den Betrieb der Tiefziehmaschine durchführen, so daß die von dem Unternehmer geschätzte lange Laufzeit der Tiefziehmaschine gewährleistet ist. Wenn bei gefülltem Magazin der Rollenwechsel vorgenommen werden muß, kann die Förderung der Bahn ausgeschaltet, die leere Hülse der ersten Vorratsrolle durch eine gefüllte Hülse mit der neuen Vorratsrolle der Kunststoffbahn ausgetauscht und die beiden Bahnenden (Ende der ersten und Anfang der zweiten Rolle) miteinander verbunden werden. Im allgemeinen erfolgt dieses Verbinden ähnlich wie bei dem Schneiden und Kleben von Filmen, vorzugsweise durch Auflegen eines Klebebandes, wie z.B. eines Tesafilmes. Es versteht sich, daß für diese Arbeiten eine z.B. zehn minütige Stillstandszeit der Kunststoffbahn erforderlich ist. Das genannte Magazin kann erfindungsgemäß nun so ausgelegt werden, daß es die Saugplatte z.B. zehn Minuten lang mit den erforderlichen Zuschnitten versorgen kann, bis es leergelaufen ist. Dann aber kann die Bahn wieder eingeschaltet und weitergefördert werden. Die Maschine auf der Saugplattenseite erfährt also durch den Rollenwechsel mit allen damit verbundenen Arbeiten keinerlei Nachteile, denn sie "merkt" nichts davon.

Das Magazin hat eine Eingangsseite, welche der Schneideinrichtung zugeordnet ist und in welche von der Schneideinrichtung die vereinzelten Zuschnitte hereingefördert werden, beispielsweise bei vertikaler Anordnung hereinfallen. Ausgangsseitig müssen die vereinzelten Zuschnitte abgenommen werden. Am abgangsseitigen, z.B. unteren Ende des Magazins liegt der jeweils unterste Zuschnitt auf Stützkanten, über die er beispielsweise durch Saugeinrichtungen herausgezogen werden kann. Erfindungsgemäß ist eine mit Saugern versehene Klappe beweglich so vorgesehen, daß sie Zuschnitte aus dem Magazin erfassen und in eine Führungseinrichtung einlegen kann.

Jeder zweite Zuschnitt wird von den Saugern einer ersten Stützplatte abgezogen. Während die erste Stützplatte den angesaugten Zuschnitt nach Heranfahren an die beheizbare Saugplatte direkt an diese abgeben kann, muß der erste Zuschnitt, weicher von der Klappe mit den Saugern erfaßt und in die Führungseinrichtung eingestellt worden war, von dieser Führungseinrichtung auf die andere Seite der beheizbaren Saugplatte gefördert werden. Dort steht eine zweite Stützplatte in Aufnahmebereitschaft und ist in der Lage, den in der Endposition der Führungseinrichtung angekommenen Zuschnitt zu erfassen und ebenfalls an die beheizbare Saugplatte anzulegen, allerdings auf der der ersten Stützplatte gegenüberliegenden Seite. Mit Hilfe der Führungseinrichtung können also beide Stützplatten auf beiden Seiten der beheizbaren Saugplatte mit Zuschnitten von ein und derselben Stelle, nämlich der Abgangsseite des Magazins versorgt werden.

Durch diesen Aufbau ist die Produktion einer Tiefziehmaschine vereinfacht und dennoch kann die Maschine eine hohe Stückzahl Packungen pro Minute erstellen. Personelle Manipulationen sind weitgehend ausgeschaltet, so daß auch die Hygieneanforderungen besser erfüllt werden.

Vorteilhaft ist es erfindungsgemäß weiterhin, wenn das Magazin im Querschnitt trichterförmig ist und auf zwei benachbarten Seiten Führungswände für eine präzise Anlage der Zuschnitte und vorzugsweise eine Rütteleinrichtung aufweist und wenn vorzugsweise eine Schwenkklappe zum Auswerfen vereinzelter Zuschnitte ansteuerbar vorgesehen ist. Die Abnahme der Zuschnitte muß möglichst genau erfolgen, und dies wird durch die vorstehenden Maßnahmen in sehr einfacher Weise erreicht. Verwendet man die Schwerkraft in dem erfindungsgemäßen Magazin derart, daß die Eingangsseite für die Zuschnitte oben und die Abgangsseite unten liegen, dann läßt sich allein durch schräge Magazinwände in Form eines eckigen Trichters eine Führung der Zuschnitte erreichen, insbesondere wenn man die Hauptachse des Trichters schräg anstellt und die Zuschnitte auf zwei benachbarte, beispielsweise unter einem Winkel von 90° zueinander angeordnete Seitenwände auflaufen läßt. Sollte dieses exakte Herunterfallen und Entlanggleiten an den Führungswänden für spezielle Kunststoffzuschnitte noch nicht für eine präzise Anlage ausreichen, dann kann eine Rütteleinrichtung etwaige Reibungen überwinden und für die gewünschte präzise Anlage sorgen.

Beim Rollenwechsel wird das letzte Ende der ersten Bahn mit dem vorderen Ende der zweiten Bahn verbunden, beispielsweise durch Verkleben oder Auflegen eines Klebestreifens. Selbstverständlich kann ein mit einer solchen Klebestelle versehener Zuschnitt nicht zum Tiefziehen der zu produzierenden Packungen verwendet werden. Die erfindungsgemäße Vorrichtung sollte also vorzugsweise schon vor dem Tiefziehvorgang diesen für das Tiefziehen unbrauchbaren Zuschnitt eliminieren. Auch diese Verbesserung der Produktion ist erfindungsgemäß möglich, nämlich durch die am Magazin ansteuerbar vorgesehene Schwenkklappe, deren Schwenkachse auf der der Zuführseite der vereinzelten Zuschnitte gegenüberliegenden Seite angeordnet ist. Auf diese Weise kann bei entsprechender Ansteuerung der mit der Klebestelle versehene Zuschnitt auf die heruntergedrehte Schwenkklappe auflaufen und in dem Augenblick zur Seite von der Schwenkklappe herausgeworfen werden, wenn der nächste, nun brauchbare Zuschnitt aus der Schneideinrichtung zum Magazin geführt wird.

Vorteilhaft ist es gemäß der Erfindung ferner, wenn die mit Saugern versehene Klappe an der Unterseite des Magazins um eine horizontale Welle schwenkbar bis in eine Position parallel zur Einlauffläche der Führungseinrichtung angeordnet ist. Die Führungseinrichtung kann den plattenförmigen Zuschnitt, der von der Unterseite des Magazins oder seiner Ausgangsseite abgezogen wird, vorzugsweise in vertikaler Position fördern, so daß der Zuschnitt zweckmäßig in etwa horizontaler Lage von der Unterseite des Magazins abgezogen und in etwa vertikale Lage an der Führungseinrichtung gebracht wird, sofern diese vertikale Lage die gewünschte Position parallel zur Einlauffläche der Führungseinrichtung ist. In diesem Falle kann die Klappe um die beschriebene horizontale Welle geschwenkt werden, wodurch sich eine besonders einfache Konstruktion der erfindungsgemäßen Vorrichtung ergibt.

Günstig ist es erfindungsgemäß auch, wenn die erste Stützplatte mit Saugern von einer Abnahmeposition an der Unterseite des Magazins in eine Aufgabeposition neben der beheizbaren Saugplatte um eine horizontale Achse schwenkbar und gegenüber der horizontalen Achse translatorisch bewegbar ist. Eine solche Stützplattenaufhängung erlaubt einen einfachen Aufbau, weil beispielsweise ein pneumatischer Zylinder die Stützplatte über eine Kolbenstange haltert, so daß hierdurch die translatorische Bewegung gegeben ist; andererseits selbst um die erwähnte horizontale Achse schwenkbar ist, so daß die erste Stützplatte damit sowohl kreisbogenförmig als auch geradlinig bewegbar ist. Die horizontale Achse für die erste Stützplatte bzw. den sie halternden pneumatischen Zylinder kann dabei getrennt von der horizontalen Welle der vorstehend beschriebenen Klappe angeordnet sein. Damit ist eine hohe Produktionsleistung erreichbar, denn nach dem Herausschwenken der bewegbaren Klappe von der Unterseite des Magazins kann bereits die erste Stützplatte an die Unterseite herangeschwenkt werden, so daß Zug um Zug ein Zuschnitt nach dem anderen von der Abnahmeposition des Magazins abgenommen werden kann.

Oben wurde bereits erläutert, daß auf der der beheizbaren Saugplatte gegenüberliegenden Seite die zweite Stützplatte bewegbar vorgesehen ist. Wenn nun erfindungsgemäß vorgesehen wird, daß diese zweite Stützplatte von einer Aufnahmeposition in eine Aufgabeposition translatorisch bewegbar ist, dann erreicht man auch dadurch einen vergleichsweise einfachen Aufbau mit hoher Produktionsleistung. Ist nämlich der plattenförmige Zuschnitt mittels der Führungseinrichtung auf die andere Seite, die beispielsweise auch die zweite Seite genannt werden könnte, angekommen, dann tritt die zweite Stützplatte infolge ihrer translatorischen Bewegbarkeit mit dem Zuschnitt in Verbindung und bewegt diesen translatorisch bis an die Oberfläche der beheizbaren Stützplatte. Während die zweite Stützplatte den Zuschnitt von der zweiten Seite heranfährt, kann gleichzeitig die erste Stützplatte den anderen Zuschnitt auf die erste Seite heranfahren mit der Folge der gleichzeitigen Beschickung von Zuschnitten auf beide Seiten der beheizbaren Saugplatte.

Bei vorteilhafter weiterer Ausgestaltung der Erfindung weist die Führungseinrichtung eine in Draufsicht U-förmige Transportstrecke auf, wobei eine Einlauffläche auf der einen Seite der beheizbaren Saugplatte und eine Endfläche auf deren gegenüberliegender Seite die Schenkel des U bilden. Erfolgt die genannte Draufsicht in vertikaler Richtung von oben nach unten und befindet sich die ebene Einlauffläche der Führungseinrichtung vertikal, dann erscheint der zu fördernde Zuschnitt da Linie, und man kann seine Bahn linienförmig beschreiben, z.B. entlang der Linie eines U. Die Führungseinrichtung muß deshalb so vorgesehen sein, daß sie eine U-förmige Transportstrecke aufweist, in deren Innerem oder dem Leib des U die beheizbare Saugplatte aufgenommen wird mit der Folge, daß durch diese U-förmige Bahn auf der Transportstrecke der Zuschnitt von einer Seite der Saugplatte auf ihre gegenüberliegende zweite Seite gebracht werden kann. Dabei fördert die mit den Saugern versehene bewegbare Klappe die jeweiligen Zuschnitte an die Einlaufseite der U-förmigen Transportstrecke, welche eine vertikal angeordnete und ebene Fläche sein kann. Von dort sorgen geeignete Mittel für die Förderung des Zuschnittes längs der U-förmigen Transportstrecke zu der gegenüberliegenden Endfläche, die parallel zur Einlauffläche sein sollte und vorzugsweise ebenfalls eben ist und parallel liegt.

Für eine derartige Ausgestaltung der die Saugplatte umgreifenden U-förmigen Transportstrecke ist es erfindungsgemäß besonders zweckmäßig, wenn die Führungseinrichtung in Draufsicht vier, ein Viereck aufspannende, um vertikale Achsen drehbare Umlenk- und/oder Antriebsräder für einen Endlosförderer und zwei, die U-Form der Transportstrecke vorgebende weitere Umlenkräder aufweist. Diese letztgenannten zwei Umlenkräder sollten dann innerhalb des Vierecks liegen. Damit ergibt sich praktisch eine Gesamtförderbahn in U-Form. An der offenen Seite des U besteht Zutritt zu der beheizbaren Saugplatte, während auf der gegenüberliegenden geschlossenen Seite der U-förmigen Transportstrecke die gewünschte Herumführung der Zuschnitte erfolgt. Eine solche Führungseinrichtung ist einfach zu bauen und zuverlässig zu betreiben.

Es ist erfindungsgemäß weiterhin von Vorteil, wenn die Führungseinrichtung die Längskanten der Zuschnitt halternde, parallel und im Abstand zueinander verlaufende Führungsschienen aufweist. Im Querschnitt und in Förderrichtung der Zuschnitte gesehen, können diese vorzugsweise aus Kunststoff oder einem Metall bestehenden Führungsschienen V-Form haben, in deren Grund die Längskanten der Zuschnitte liegen und deren offene Seiten einander gegenüberliegen. Es sind vorzugsweise oben und unten je eine Führungsschiene so vorgesehen, daß das V der unteren Führungsschiene normal steht, während das V der oberen gegenüberliegenden Führungsschiene auf dem Kopf steht.

Zweckmäßig ist es dabei ferner, wenn zwischen der Vorratsrolle und der Schneideinrichtung eine Stanzeinrichtung vorgesehen ist. Mit dieser können störende Ecken an den Kanten der Zuschnitte abgestanzt werden, so daß die Außenkanten der fertig gestanzten und letztlich auch geschnittenen Zuschnitte die Außenkanten der tiefgezogenen Packung bilden. Weitere Nachbehandlungen sind dann nicht erforderlich, wodurch wiederum eine Vereinfachung der Produktion gegeben ist.

Es ist auch bekannt, mehrere Packungen aus einem einzigen Paar von gegenüberliegenden Zuschnitten zu formen, so daß die Stanzeinrichtung dann das Abstanzen sämtlicher Ecken aller Packungen an einem Zuschnitt besorgen kann.

Vorteilhaft ist es gemäß der Erfindung auch, wenn zwischen der Vorratsrolle und der Schneideinrichtung eine Klebeeinrichtung zum Verbinden der Kunststoffbahnen beim Rollenwechsel vorgesehen ist. Der Klebevorgang wurde oben bereits erläutert. Die Anordnung der Klebeeinrichtung ist durch die zuletzt erwähnten Maßnahmen besonders günstig, und vor allem besteht an dieser Steile der Vorrichtung geeigneter Platz zur Verfügung, um auch Klebefilmstreifen zu lagern und zuzuführen, Justiervorgänge vorzunehmen und dergleichen.

Weitere Vorteile, Merkmale und Anwendungsmöglichkeiten der vorliegenden Erfindung ergeben sich aus der folgenden Beschreibung im Zusammenhang mit den Zeichnungen. Es zeigen:
- Figur 1: schematisch die Gesamtansicht der Vorrichtung mit Vorratsrolle und Teilen der Tiefziehmaschine,
- Figur 2: abgebrochen und vergrößert den für die Erfindung wichtigen Teil der Maschine mit Schneideinrichtung, Magazin, bewegbarer Klappe und der ersten und zweiten Stützplatte,
- Figur 3: in vertikaler Draufsicht auf die Vorrichtung der Figur 1 etwa entlang der Linie III-III die Führungseinrichtung in Gestalt des U,
- Figur 4: eine Querschnittsansicht durch ein Trum der Führungseinrichtung etwa entlang der Linie IV-IV der Figur 3 und
- Figur 5: schematisch und abgebrochen eine Kunststoffbahn unter Darstellung des Stanzvorganges mit vorgesehener Schneidstelle.

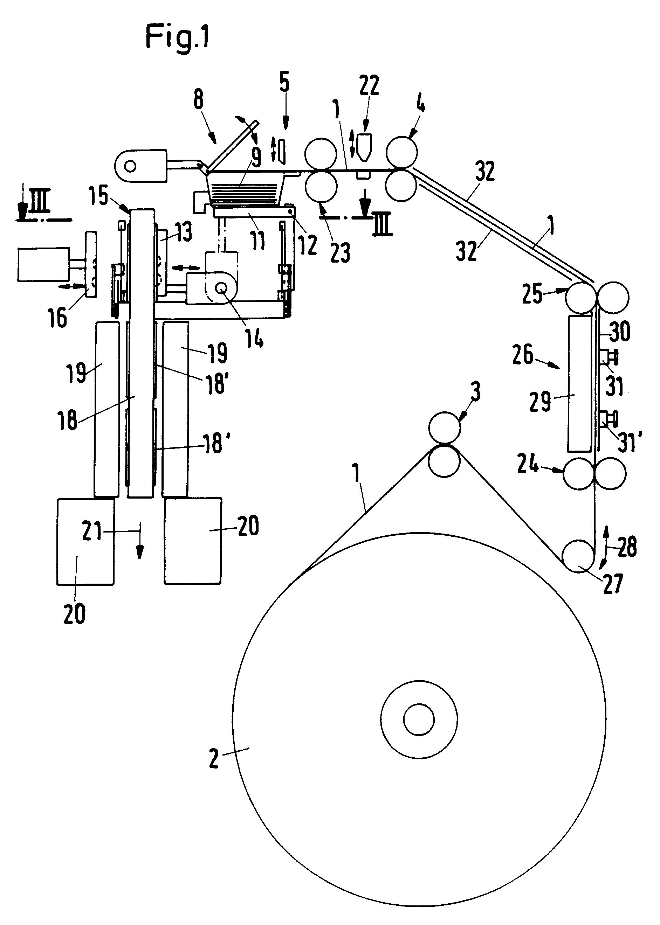

Den Gesamtaufbau der Vorrichtung sieht man am besten in der Querschnittsdarstellung der Figur 1, bei welcher die Kunststoffbahn 1 von der Vorratsrolle 2 über ein erstes Rollenpaar 3 und ein nachgeschaltetes zweites Rollenpaar 4 abgezogen und zur Schneideinrichtung 5 mit beweglichem Obermesser 6 und stationärem Untermesser 7 in das Magazin 8 geführt wird. Man erkennt die vereinzelten Zuschnitte 9, die in dem Trichter 10 des Magazins 8 liegen und von oben eingeführt und von unten abgenommen werden können.

Das Abnehmen der Zuschnitte 9 erfolgt an der unteren oder Abnahmeseite des Magazins 8 zum einen über die bewegliche Klappe 11, welche um die horizontale Welle 12 schwenkbar ist, sowie zum anderen über die erste Stützplatte 13, welche um die horizontale Achse 14 schwenkbar ist.

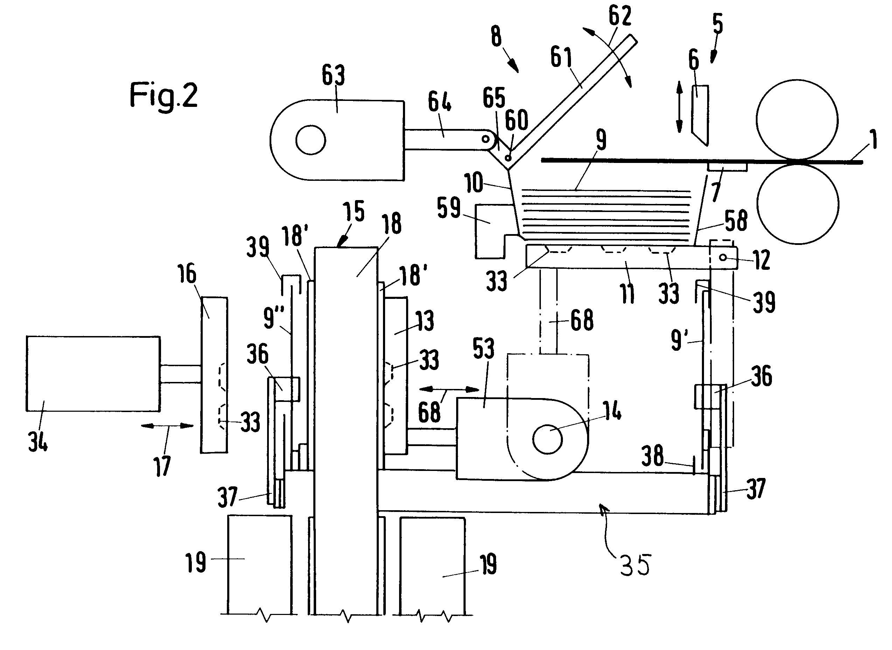

In den Figuren 1 und 2 befinden sich die bewegliche Klappe 11 und die erste Stützplatte 13 auf der rechten, sogenannten ersten Seite der beheizbaren Saugplatte 15, während auf der linken und sogenannten zweiten (gegenüberliegenden) Seite die zweite bewegliche Stützplatte 16 translatorisch in Richtung des Doppelpfeiles 17 bewegbar angeordnet ist.

Der Aufbau der hier nur allgemein als "beheizbare Saugplatte 15" bezeichneten Platte, ist für die Beschreibung der hier als bevorzugt angesehenen Ausführungsform nicht besonders wesentlich. Genauer könnte erwähnt werden, daß es sich bei der Saugplatte 15 eigentlich um einen Hauptträger 18 mit aufgesetzten Hauptsaugplatten 18' handelt. Dabei genügt die Feststellung, daß nicht gezeigte Sauger und Heizeinrichtungen auf beiden Oberflächen der allgemein mit 15 beheizbaren Saugplatte angeordnet und in Figur 2 zur Verdeutlichung mit 18' bezeichnet sind. Bei dem Hauptträger 18 handelt es sich um eine hohe, etwa drei Etagen aufweisende Platte, bei welcher sich die Heiz- und Saugeinrichtungen 18' so wiederholen, daß der Hauptträger auf jeder seiner zwei gegenüberliegenden Seiten jeweils drei dieser Heiz- und Saugplatten 18' aufweist.

Besonders deutlich sieht man in Figur 1 ferner den weiteren Aufbau der Tiefziehmaschine, die nämlich ferner Außenheizplatten 19 im unteren Bereich des Hauptträgers 18 und weiter darunter angeordnet Heizplatten 20 für den Tiefziehvorgang aufweist, der hier nicht interessiert. Die Verarbeitung der Zuschnitte erfolgt jedenfalls von oben nach unten entsprechend dem Pfeil 21 in Figur 1.

Bemerkenswert ist in Figur 1 ferner die Stanzeinrichtung 22, ein drittes Antriebsrollenpaar 23, Umlenkrollenpaare 24 und 25 vor und hinter einer Klebestation 26 und eine Tänzerrolle 27, die sich entsprechend dem Doppelpfeil 28 nach oben und unten bewegen kann, um eine Schlaufe zu bilden, wenn die Antriebsrollenpaare 4, 23 die Kunststoffbahn 1 intermittierend vorziehen.

Die allgemein mit 26 bezeichnete Klebeeinrichtung ist im normalen Betrieb beim Abziehen des Kunststoffbandes 1 von der Vorratsrollie 2 nicht in Tätigkeit, sondern arbeitet beim Rollenwechsel. Dabei läuft die Bahn 1 über einen als Gegenlage wirkenden Tisch 29, auf dessen bezüglich der Bahn 1 gegenüberliegender Seite eine Abdeckung 30 mit zwei Befestigungsriegeln 31, 31' angeordnet ist. Mit dem Befestigungsriegel 31 wird das Bahnende der vorhergehenden Bahn 1 und mit dem Befestigungsriegel 31' der Anfang der nächsten Bahn von der neuen vollen Rolle festgehalten, so daß die beiden geradegeschnittenen Enden der Bahn Stoß auf Stoß am Tisch 29 arretiert und mit einem Klebestreifen, z.B. einem Tesafilm, miteinander verbunden werden.

Auch eine solche Klebesteile durchläuft das Umlenkrollenpaar 25 in Richtung nach oben zur Schneideinrichtung 5 und durchläuft vor dem Eintreten zwischen das Antriebsrollenpaar 4 einen Bahnabschnitt, der durch Bleche 32 abgeschirmt ist, um das Anhaften von Staub zu vermeiden; und gegebenenfalls auch zu Reinigungszwecken.

Anhand Figur 2 läßt sich der Übergang der Zuschnitte 9 in die verschiedenen Positionen gut erläutern. Die um die horizontale Welle 12 bewegliche Klappe 11 weist Sauger 33 auf, die mit nicht gezeigten Vakuumleitungen verbunden und in gesteuerter Weise mit Vakuum beaufschlagt werden können. Vergleichbare Sauger 33 befinden sich auch in der ersten Stützplatte 13, welche um die horizontale Achse 14 schwenkbar ist, und auch in der zweiten Stützplatte 16, die mit Hilfe des pneumatischen Zylinders 34 in Richtung des Doppelpfeiles 17 translatorisch hin- und herbewegbar ist. Mit Hilfe der Sauger ist es möglich, die Zuschnitte 9 an den betreffenden Klappen/Platten 11, 13, 16 festzuhalten, wobei sich diese Vorrichtungsteile dann zusammen mit den Zuschnitten 9 in andere Positionen bewegen können.

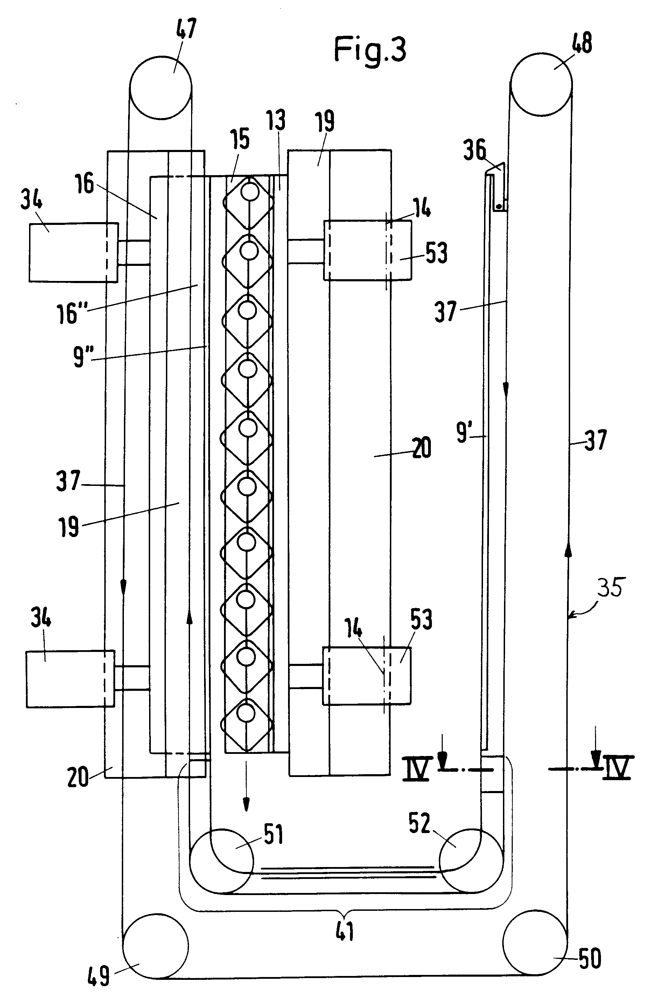

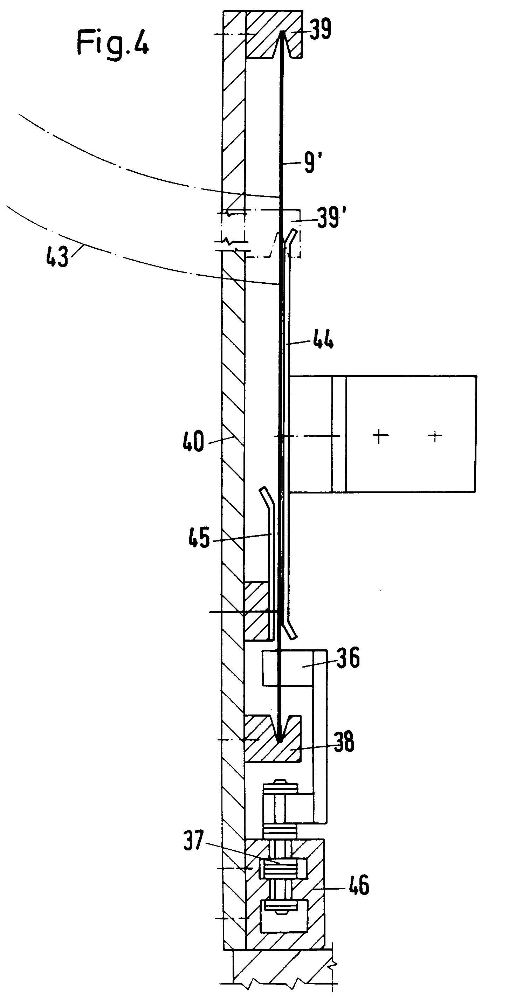

In Figur 2 ist die bewegliche Klappe 11 mit ausgezogenen Linien in der horizontalen Position und mit strichpunktierten Linien in der vertikalen Position gezeigt, wobei letztere parallel zu der ebenfalls vertikalen Einlauffläche der allgemein mit 35 bezeichneten Führungseinrichtung liegt. In dieser befindet sich gerade der deshalb vertikal angeordnete Zuschnitt 9', wie auch in Figur 4 dargestellt ist. Von dieser vertikal angeordneten Einlauffläche der Führungseinrichtung 35 muß der Zuschnitt 9' auf die bezüglich der beheizbaren Saugplatte 15 gegenüberliegende Seite in die Position 9'' gefördert werden, was durch Mitnehmer 36 erfolgt, die von einer endlosen Doppelgliederkette als Förderer 37 in U-Form um die Saugplatte 15 herumbewegt werden. Dies wird nachfolgend anhand Figur 3 erläutert. Zuvor werden noch die unteren 38 und oberen Führungsschienen 39 erwähnt, die man in den Figuren 2 und 4 sieht, wobei In Figur 4 die strichpunktierte Position 39' der oberen Führungsschiene veranschaulichen soll, daß je nach der Größe der Zuschnitte 9 bzw. 9' diese obere Führungsschiene 39 auch in ihre mittlere Position der strichpunktiert gezeigten Führungsschiene 39' verschoben werden kann. Eine Halterungsplatte 40 verbindet die untere Führungsschiene 38 mit der oberen Führungsschiene 39 bzw. haltert diese insbesondere in der in Figur 3 erkennbaren U-förmigen Transportstrecke 41, welche durch eine U-förmig gebogene, geschweifte Klammer veranschaulicht ist. In den Schwenkbereichen der beweglichen Klappe 11 um die horizontale Weile 12 und auch auf der entsprechend gegenüberliegenden Seite ist wenigstens die obere Führungsschiene 39 weggenommen, damit Bewegungen aus der jeweils vertikalen Fläche der Führungseinrichtung 35 heraus bzw. in diese hinein möglich sind, wie in Figur 4 durch die strichpunktierten Linien 43 angedeutet ist. Zur weiteren Halterung insbesondere in den schienenfreien Abschnitten ist gemäß Figur 4 eine stillstehende Führung 44 angebracht, der ein Anschlag 45 zur weiteren Halterung des Zuschnittes 9' gegenübersteht. Unten erkennt man Schlenenabschnitte 46 für die Doppelgliederkette als Förderer 37 (Figur 4).

Die Führungseinrichtung 35 sieht man in Draufsicht in Figur 3. Dort befinden sich oben zwei Antriebs-/Umlenkräder 47, 48, die zusammen mit zwei unteren Umlenkrädern 49, 50 ein Viereck für den Förderer 37 (Doppelgliederkette) aufspannen, wobei dieser Endlosförderer 37 in Richtung der Pfeile der Figur 3 bewegt wird. Damit sich die U-Form ergibt und außerdem die U-förmige Transportstrecke 41 gebildet wird, deren freie Schenkel sich geradlinig bis zu den oberen Antriebs-/Umlenkrädern 47, 48 fortsetzen, sind im unteren Bereich zwei weitere Umlenkräder 51, 52 angebracht. Alle Umlenkräder 47-52 sind um vertikale Achsen drehbar.

Durch die Draufsicht auf Figur 3 sieht man die verschiedenen ebenen Flächen der Führungseinrichtung als Linien. Auf der rechten Seite der Figur 3 liegt der Zuschnitt 9' gerade in der Einlauffläche der Führungseinrichtung 35, während auf der der beheizbaren Saugplatte 15 gegenüberliegenden Seite der Zuschnitt 9'' gerade in der Endfläche der U-förmigen Transportstrecke 41 bzw. in Verlängerung deren U-Schenkel gezeigt ist. In der Einlauffläche und in der Endfläche befinden sich die Zuschnitte 9' bzw. 9'' in der ebenen Position. Die Zuschnitte sind aber flach und biegefähig, weshalb sie auch leicht den Krümmungen der U-förmigen Transportstrecke 41 folgen können.

Im Vergleich zu Figur 2 zeigt Figur 3, daß auf der linken Seite der Saugplatte 15 zwei pneumatische Zylinder 34 übereinander angeordnet sind, und daß auch auf der gegenüberliegenden rechten Seite zwei jeweils um die horizontale Achse 14 schwenkbare pneumatische Zylinder 53 zur Halterung der ersten Stützplatte 13 angeordnet sind. Die pneumatischen Zylinder 34 haltern die zweite Stützplatte 16, die bei der Betrachtung der Figur 3 in zwei verschiedenen Positionen dargestellt ist, nämlich die zurückgezogene und mit 16 bezeichnete Lage der zweiten Stützplatte entsprechend Figur 2 und eine rechte Lage, in der die zweite Stützplatte mit 16'' bezeichnet ist. Außerdem sieht man im Bereich unter der Saugplatte 15 eine Reihe von zehn Packungen in Draufsicht, die fertig tiefgezogen und zu einem Stück verbunden sind. Diese Packungsreihe dient nur der besseren Darstellung und für das Verständnis, während man diese Packungsreihe an und für sich nicht direkt sieht, wenn man den Schnitt III-III der Figur 1 berücksichtigt.

Durch die U-förmige Ausgestaltung der Transportstrecke 41 ist es möglich, den Zuschnitt 9' von der Einlauffläche zwischen die Führungsschienen 38, 39 zu bringen und um die Umlenkräder 51, 52 herum zu führen, damit nach Begradigung der Zuschnitt nach dem Verlassen der Transportstrecke 41 in seine gerade ebene Gestalt in die Endfläche zu liegen kommt, wo der Zuschnitt mit 9'' bezeichnet ist. Durch diese U-förmige Förderstrecke werden sowohl die Außenwärmebacken 19 als auch die Tiefziehwerkzeuge 20 mitsamt Saugplatte 15 umlaufen. Auf diese Weise ist es möglich, mit Hilfe der in Figur 3 dargestellten Führungseinrichtung 35 die Zuschnitte von der in den Figuren 2 und 3 gezeigten rechten Einlauffläche 9' zu der gegenüberliegenden Endfläche nach links zu transportieren, wo die Zuschnitte mit 9'' bezeichnet sind.

Wir wenden uns nochmals Figur 2 zu und dort insbesondere der Darstellung des Magazins 8. Dieses hat nämlich im Querschnitt die Form eines Trichters mit Führungswänden, von denen schematisch nur zwei gegenüberliegend und gegenüber der Vertikalen geneigt dargestellt sind. Im Betrieb ist der Stapel der Zuschnitte 9 außerdem schräg entsprechend geneigt an einer dieser Führungswände 58 anliegend zu denken. Außerdem, aber nicht dargestellt, muß der Stapel dann auch an der benachbarten Führungswand anliegen, um eine präzise Position des jeweils untersten Zuschnittes 9 zu gewährleisten. Eine Rütteleinrichtung 59 hilft der Anlage an diese Führungswände 58 gegebenenfalls nach.

Während die Unterseite des Magazins 8 auch gleichzeitig die Abnahmeposition ist, muß dann die offene Oberseite die Aufnahmeposition sein, in welche die gerade abgeschnittenen Zuschnitte einfallen. Dort ist auf der der Schneideinrichtung 5 gegenüberliegenden hinteren Seite eine Achse 60 angebracht, um welche herum eine Schwenkklappe 61 im Sinne des gebogenen Doppelpfeils 62 schwenken kann, angetrieben durch den pneumatischen Zylinder 63, welcher über die Kolbenstange 64 an dem L-förmigen Schenkel 65 der Schwenkklappe 61 für die Drehung um die Achse 60 angreift.

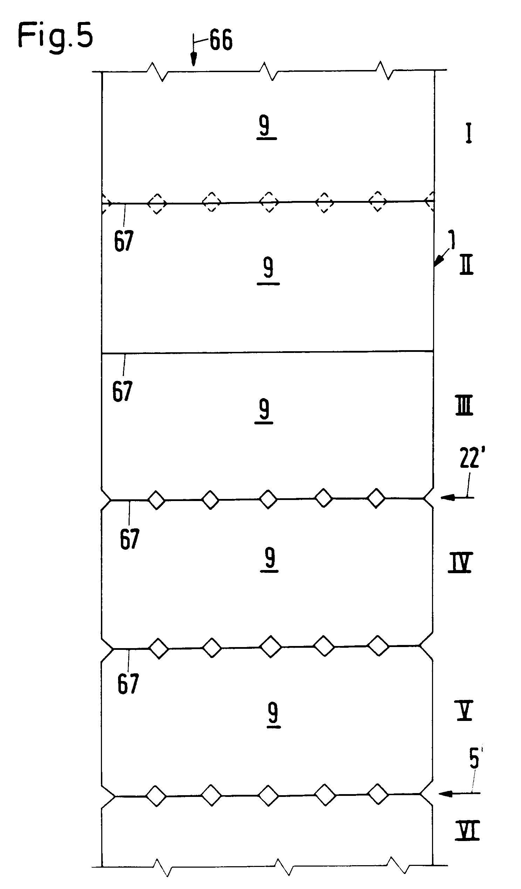

Im Betrieb wird die in Figur 5 gezeigte Kunststoffbahn 1 in Richtung des Pfeiles 66 transportiert, wobei die Querlinien 67 innerhalb der Bahn die Grenzen der einzelnen Zuschnitte 9 darstellen. Beispielsweise kann aus dem jeweiligen Zuschnitt 9 der Bahn 1 nach Figur 5 eine Reihe von sechs Packungen erstellt werden. Greift man aus der Bahn 1 einen gedachten Zuschnitt 9 heraus, dann durchläuft dieser die Positionen I bis VI nacheinander. Auf der Grenzlinie 67 zwischen den Positionen I und II sieht man eine Reihe von gestrichelt gezeigten Quadraten, die lediglich die Lage späterer Stanzschnitte darstellen, ohne daß hier bereits eine Stanzung vorgenommen wäre. Vielmehr erfolgt weder in der Position I noch in der Position II irgendein Schnitt oder eine Stanzung an der Bahn, weshalb die Linie 67 zwischen den Positionen II und III auch durchgezogen ist, obgleich die Bahn hier noch einstückig weiter in Transportrichtung 66 läuft. An der mit dem Pfeil 22' dargestellten Position zwischen den Positionen III und IV wird in der Trennlinie 67 die vorstehend erwähnte Stanzung mittels der Stanzeinrichtung 22 eingebracht. Dies erfolgt während der Stillstandszeit der Bahn 1, denn die Antriebsräderpaare 4 und/oder 23 fördern die Kunststoffbahn 1 intermittierend. Beim Weiterbewegen in die Position IV befindet sich nun an der Linie 67 zwischen den Positionen IV und V die Reihe der eingestanzten Ausnehmungen, während nachfolgend an der Position des Pfeiles 22' die nächste Einstanzung vorgenommen wird. Bei weiterem Vorbewegen in Transportrichtung 66 erfolgt dann bei dem Pfeil 5' der Schnitt mitten durch die Reihe der ausgestanzten Ausnehmungen unter Vereinzelung des Zuschnittes, der ab Position VI als vereinzelter Zuschnitt vorliegt und unmittelbar in das Magazin 8 fällt.

Der weitere Verlauf des vereinzelten Zuschnittes 9 läßt sich nun gut anhand der Figuren 2 und 3 erläutern. Die Sauger 33 der bewegbaren Klappe 11 saugen den untersten Zuschnitt 9 an und ziehen ihn beim Herunterschwenken um die horizontale Welle 12 um 90° aus der Abnahmeseite des Magazins 8 ab in die Einlauffläche der Führungseinrichtung 35, sozusagen In Anlage vor den Mitnehmer 36. Die Klappe 11 hat dann die in Figur 2 strichpunktiert gezeigte vertikale Position erreicht. Der noch angesaugt gehaltene Zuschnitt ist hier mit 9' bezeichnet. Dies gilt auch für die Figur 3. Schaltet nun der Förderer 37 intermittierend ein, dann ist kurz zuvor das Vakuum an den Saugern 33 abgeschaltet worden, so daß der Zuschnitt 9' in die Schienen 38, 39 der Transportstrecke 41 einfahren kann. Er wird In Richtung der Pfeile des Förderers 37 vorgeschoben und gelangt in die Endposition, wo der Zuschnitt mit 9'' bezeichnet ist. Die zweite Stützplatte 16 wird von den pneumatischen Zylindern 34 nun aus ihrer Wartesteilung translatorisch nach rechts in Richtung des Pfeiles 17 bis an den Zuschnitt 9'' herangefahren, die dort befindlichen Sauger 33 werden mit Vakuum beaufschlagt, und nun kann der Zuschnitt 9'' mit Hilfe dieser zweiten Stützplatte 16 gegen die linke Seite der beheizbaren Saugplatte 15 angedrückt werden. Auch dort sind Sauger vorgesehen, die nach dem Andrücken mit Vakuum beaufschlagt werden, wonach die Sauger 33 der zweiten Stützplatte 16 belüftet werden und die zweite Stützplatte 16 wieder in ihre in Figur 3 gezeigte linke Position zurückfährt (siehe auch Figur 2).

Während dieser eben beschriebenen Transportzeit wird die erste Stützplatte 13 durch Drehen des pneumatischen Zylinders 53 um die horizontale Achse 14 herum in eine Position gebracht, so daß die erste Stützplatte 13 ebenfalls die horizontale Position an der Abnahmeseite des Magazins erreicht. Die Sauger 33 werden eingeschaltet und der unterste Zuschnitt durch translatorische Bewegung der Kolbenstange 68 gemäß Figur 2 heruntergezogen und danach um 90° um die Achse 14 nach links geschwenkt; aus dieser Position in Richtung des Doppelpfeiles 69 translatorisch nach links gegen die Saugplatte 15 vorbewegt und dort angelegt. Vakuum an den Saugern 33 der ersten Stützplatte 13 wird abgeschaltet, Vakuum an der beheizbaren Saugplatte 15 wird eingeschaltet, und dann kann sich der gleiche Bewegungsablauf wiederholen.

Durch entsprechende zeitliche Steuerung wird erreicht, daß jeweils auf gegenüberliegenden Seiten Zuschnitte 9 gleichzeitig von den Stützplatten 13, 16 gegen die Saugplatte 15 angedrückt werden.

Beim Rollenwechsel erfolgt die oben beschriebene Klebung, die Schwenkklappe 61 klappt gemäß gebogenem Doppelpfeil 62 nach unten, der vorderste Zuschnitt, welcher die Klebestelle enthält und Ausschuß darstellt, läuft auf die Schwenkklappe 61 auf, wird durch das Messer 6 abgeschnitten, wonach die Schwenkklappe 61 nach links oben zurückschwenkt und den Zuschnitt mit der Klebestelle auswirft.

## Patentansprüche

1. Vorrichtung zum Zuführen von plattenförmigen Zuschnitten (9) aus tiefziehfähigem Kunststoff zur Aufnahmestation einer Formmaschine mit mindestens einer beheizbaren Saugplatte (15), dadurch gekennzeichnet, daß die beheizbare Saugplatte (15) zwei gegenüberliegende Seiten hat, deren jeweilige Oberfläche mit einem Zuschnitt (9) beschickt werden kann, daß eine Vorratsrolle (2) mit einer Bahn (1) aus tiefziehfähigem Kunststoff über Antriebsrollenpaare (3, 4, 23) intermittierend antreibbar vor einer Schneideinrichtung (5) mit nachgeschaltetem Magazin (8) vorgesehen ist, daß eine bewegliche, mit Saugern (33) versehene Klappe (11) und eine erste Stützplatte (13) mit der Abnahmeseite des Magazins (8) in Eingriff bringbar sind, daß das Abnehmen der Zuschnitte (9) an der Abnahmeseite des Magazins (8) zum einen über die bewegliche Klappe (11), zum anderen über die erste Stützplatte (13) erfolgt, daß eine zweite bewegliche und mit Saugem (33) versehene Stützplatte (16) auf der bezüglich der beheizbaren Saugplatte (15) anderen Seite, gegenüber der ersten Stützplatte (13), angeordnet ist, daß eine Führungseinrichtung (35) mit Förderer (37) zum Herumführen der Zuschnitte (9) von der beweglichen Klappe (11) auf die gegenüberliegende Seite der beheizbaren Saugplatte (15) zur zweiten Stützplatte (16) vorgesehen ist und daß die Formmaschine eine Tiefziehmaschine ist.

2. Vorrichtung nach Anspruch 1, dadurch gekennzeichnet, daß das Magazin (8) im Querschnitt trichterförmig ist und auf zwei benachbarten Seiten Führungswände (58) für eine präzise Anlage der Zuschnitte (9) und vorzugsweise eine Rütteleinrichtung (59) aufweist und daß vorzugsweise eine Schwenkklappe (61) zum Auswerten vereinzelter Zuschnitte (9) ansteuerbar vorgesehen ist.

3. Vorrichtung nach Anspruch 1 oder 2, dadurch gekennzeichnet, daß die mit Saugern versehene Klappe (11) an der Unterseite des Magazins (8) um eine horizontale Welle (12) schwenkbar bis in eine Position parallel zur Einlauffläche der Führungseinrichtung (35) angeordnet ist.

4. Vorrichtung nach einem der Ansprüche 1 bis 3, dadurch gekennzeichnet, daß die erste Stützplatte (13) mit Saugern (33) von einer Abnahmeposition an der Unterseite des Magazins (8) in eine Aufgabeposition neben der beheizbaren Saugplatte (15) um eine horizontale Achse (14) schwenkbar und gegenüber der horizontalen Achse (14) translatorisch bewegbar ist.

5. Vorrichtung nach einem der Ansprüche 1 bis 4, dadurch gekennzeichnet, daß die zweite Stützplatte (16) von einer Aufnahmeposition in eine Aufgabeposition translatorisch bewegbar ist.

6. Vorrichtung nach einem der Ansprüche 1 bis 5, dadurch gekennzeichnet, daß die Führungseinrichtung (35) eine in Draufsicht U-förmige Transportstrecke (41) aufweist, wobei eine Einlauffläche auf der einen Seite der beheizbaren Saugplatte (15) und eine Endfläche auf deren gegenüberliegender Seite die Schenke des U bilden.

7. Vorrichtung nach Anspruch 6, dadurch gekennzeichnet, daß die Führungseinrichtung (35) in Draufsichtvier, ein Viereck aufspannende, um vertikale Achsen drehbare Umlenk- und/oder Antriebsräder (47-50) für einen Endlosförderer (37) und zwei, die U-Form der Transportstrecke (41) vorgebende weitere Umlenkräder (51-52) aufweist.

8. Vorrichtung nach einem der Ansprüche 1 bis 7, dadurch gekennzeichnet, daß die Führungseinrichtung (35) die Längskanten der Zuschnitte (9) halternde, parallel und im Abstand zueinander verlaufende Führungsschienen (38, 39) aufweist.

9. Vorrichtung nach einem der Ansprüche 1 bis 8, dadurch gekennzeichnet, daß zwischen der Vorratsrolle (2) und der Schneideinrichtung (5) eine Stanzeinrichtung (22) vorgesehen ist.

10. Vorrichtung nach einem der Ansprüche 1 bis 9, dadurch gekennzeichnet, daß zwischen der Vorratsrolle (2) und der Schneideinrichtung (5) eine Klebeeinrichtung (26) zum Verbinden der Kunststoffbahnen (1) beim Rollenwechsel vorgesehen ist.

## Claims

1. An apparatus for feeding sheet-like blanks (9) of deep-drawable plastics material to the receiving station of a moulding machine having at least one heatable suction plate (15), characterised in that the heatable suction plate (15) has two oppositely disposed sides, the respective surfaces of which can be supplied with a blank (9), that a supply roll (2) with a web (1) of deep-drawable plastics material is provided which can be driven intermittently by pairs of drive rollers (3, 4, 23) in front of a cutting means (5) with a magazine (8) on its downstream side, that a movable flap (11) provided with suckers (33) and a first supporting plate (13) are able to be brought into engagement with the take-off side of the magazine (8), that the blanks (9) are removed from the take-off side of the magazine (8) firstly by way of the movable flap (11) and secondly by way of the first supporting plate (13), that a second movable supporting plate (16) provided with suckers (33) is arranged on the other side in relation to the heatable suction plate (15), opposite the first supporting plate (13), that a guide means (35) is provided with conveyers (37) to guide the blanks (9) from the movable flap (11) onto the oppositely disposed side of the heatable suction plate (15) to the second supporting plate (16), and the moulding machine is a deep-drawing machine.

2. An apparatus according to Claim 1, characterised in that the magazine (8) is of funnel-shaped cross-section and on two adjacent sides has guide walls (58) for accurate placing of the blanks (9) and preferably has a riddling device (59), and that preferably a pivotable flap (61) is provided which can be controlled in such a way that it ejects separated blanks (9).

3. An apparatus according to Claim 1 or Claim 2, characterised in that the flap (11) provided with suckers is arranged so that it can be pivoted about a horizontal shaft (12) on the underside of the magazine (8) into a position parallel to the intake surface of the guide means (35).

4. An apparatus according to one of Claims 1 to 3, characterised in that the first supporting plate (13) with suckers (33) can be pivoted about a horizontal axis (14) from a take-off position on the underside of the magazine (8) into a delivery position next to the heatable suction plate (15) and is adapted for translatory movement in relation to the horizontal axis (14).

5. An apparatus according to one of Claims 1 to 4, characterised in that the second supporting plate (16) is adapted for translatory movement from a receiving position into a delivery position.

6. An apparatus according to one of Claims 1 to 5, characterised in that the guide means (35) has a transport path (41) which is U-shaped when viewed in plan, wherein an intake surface on the one side of the heatable suction plate (15) and an end surface on its opposite side form the arms of the U.

7. An apparatus according to Claim 6, characterised in that when viewed in plan the guide means (35) has four jockey- and/or drive wheels (47-50), which can rotate about vertical axes and which span a quadrilateral figure, for an endless conveyer (37) and two further jockey wheels (51-52) which establish the U-shape of the transport path (41).

8. An apparatus according to one of Claims 1 to 7. characterised in that the guide means (35) has guide rails (38, 39) which support the longitudinal edges of the blanks (9), and which extend parallel to and at a spacing from one another.

9. An apparatus according to one of Claims 1 to 8, characterised in that provided between the supply roll (2) and the cutting device (5) is a stamping means (22).

10. An apparatus according to one of Claims 1 to 9, characterised in that provided between the supply roll (2) and the cutting means (5) is a gluing means (26) for joining the webs (1) of plastics material when the rolls are changed.

## Revendications

1. Dispositif d'amenée de découpes (9) en forme de plaque, en un plastique emboutissable, vers une station de serrage d'une machine à former comportant au moins une plaque aspirante chauffable (15), caractérisé en ce que la plaque aspirante chauffable (15) possède deux côtés opposés, la surface de chacun d'entre eux pouvant être garnie d'une découpe (9) ; qu'une bobine d'alimentation (2), avec une bande (1) de plastique emboutissable, et pouvant être entraînée d'une manière intermittente par l'intermédiaire de cylindres d'entraînement (3, 4, 23), est prévue en avant d'un dispositif de coupe (5) suivi d'un magasin (8) ; qu'un abattant (11), mobile, pourvu de buses aspirante (33), et une première plaque d'appui (13), peuvent entrer en prise avec le côté réception du magasin (8) ; que la réception des découpes (9) s'effectue, au niveau du côté réception du magasin (8), d'une part par l'intermédiaire de l'abattant mobile (11), et d'autre part par l'intermédiaire de la première plaque d'appui (13) ; qu'une deuxième plaque d'appui (16), mobile et pourvue de buses d'aspiration (33), est disposée sur le côté différent de celui de la plaque d'aspiration chauffable (15), par rapport à la première plaque d'appui (13) ; que l'on prévoit un dispositif de guidage (35) avec un transporteur (37) pour guider les découpes (9), depuis l'abattant mobile (11), sur le côté opposé de la plaque aspirante chauffable (15), jusqu'à la deuxième plaque d'appui (16) ; et que la machine à former est une machine à emboutir.

2. Dispositif selon la revendication 1, caractérisé en ce que le magasin (8) a en coupe transversale la forme d'un entonnoir, et comporte sur deux faces voisines des parois de guidage (58) assurant un appui précis des découpes (9), et de préférence un dispositif à secousses (59) ; et que de préférence un abattant pivotant (61) est prévu, de façon à pouvoir être commandé, pour éjecter les découpes individuelles (9).

3. Dispositif selon la revendication 1 ou 2, caractériséen ce que l'abattant (11) pourvu de buses aspirantes est disposé sur le côté inférieur du magasin (8) de façon à pouvoir pivoter autour d'un arbre horizontal (12) jusqu'à une position parallèle à la face d'entrée du dispositif de guidage (35).

4. Dispositif selon l'une des revendications 1 à 3, caractérisé en ce que la première plaque d'appui (13), possédant les buses d'aspiration (33), peut subir un pivotement autour d'un axe horizontal (14), d'une position de réception sur le côté inférieur du magasin (8) jusqu'à une position d'alimentation, à côté de la plaque aspirante chauffable (15), et peut subir un déplacement de translation par rapport à l'axe horizontal (14).

5. Dispositif selon l'une des revendications 1 à 4, caractérisé en ce que la deuxième plaque d'appui (16) peut subir un mouvement de translation d'une position de serrage à une position d'alimentation.

6. Dispositif selon l'une des revendications 1 à 5, caractérisé en ce que le dispositif de guidage (35) présente un tronçon de transport (41) qui, en vue de dessus, a la forme d'un U, auquel cas la face d'entrée, sur un côté de la plaque aspirante chauffable (15), et une face terminale, sur le côté opposé de cette dernière, forment les branches du U.

7. Dispositif selon la revendication 6, caractérisé en ce que le dispositif de guidage (35) présente, en vue de dessus, quatre roues de renvoi et/ou d'entraînement (47-50), formant un rectangle, pouvant tourner autour d'axes verticaux, destinées à un transporteur sans fin (37), et deux autres roues de renvoi (51-52), qui définissent la forme en U du tronçon de transport (41).

8. Dispositif selon l'une des revendications 1 à 7, caractérisé en ce que le dispositif de guidage (35) comporte des rails de guidage (38, 39), qui maintiennent les arêtes longitudinales des découpes (9), et qui courent parallèlement l'un à l'autre et à une certaine distance l'un de l'autre.

9. Dispositif selon l'une des revendications 1 à 8, caractérisé en ce qu'un dispositif de découpage (22) est prévu entre la bobine d'alimentation (2) et le dispositif de coupe (5).

10. Dispositif selon l'une des revendications 1 à 9, caractérisé en ce qu'entre la bobine d'alimentation (2) et le dispositif de coupe (5) est prévu un dispositif de collage (26) pour assembler les bandes plastiques (1) lors du changement de bobine.
